# EUROPÄISCHE PATENTANMELDUNG

(11) **EP 1 229 735 A2**
(43) Veröffentlichungstag der Anmeldung: **07.08.2002**
(21) Anmeldenummer: 02000908.0
(22) Anmeldetag: 16.01.2002
(51) Int. Cl.: H04N 5/00, H04N 5/44

(54) **Vorrichtung zum Empfang von digitalen Rundfunksignalen mit einem Schnittstellenprozessor**

(30) Priorität: 01.02.2001 DE 10104442
(71) Anmelder: GRUNDIG Aktiengesellschaft, 90471 Nürnberg (DE)
(72) Erfinder: Horn, Bernhard, 90471 Nürnberg (DE)

(57) **Zusammenfassung**

Die Erfindung betrifft eine Vorrichtung zum Empfangen von digitalen Rundfunksignalen. Sie weist ein digitales Empfangsgerät mit einem einen Tuner und einen Demodulator aufweisenden Empfangseinheit auf. Weiterhin ist eine Steuereinheit vorgesehen. Am Ausgang des Demodulators liegen einem MPEG-Transportstrom entsprechende Daten vor. Der Demodulator ist mit einer Signalverarbeitungseinheit und über eine Geräteschnittstelle des digitalen Empfangsgerätes mit einem Zusatzmodul verbunden. Das Zusatzmodul weist eine zweite Signalverarbeitungseinheit oder eine Speichereinheit auf. Ferner ist ein Schnittstellenprozessor vorgesehen, der insbesondere zur Bearbeitung von mit der Schnittstelle in Verbindung stehenden Aufgaben dient.

## Beschreibung

Die Erfindung betrifft eine Vorrichtung zum Empfang von digitalen Rundfunksignalen.

Es sind bereits sogenannte Settop-Boxen bekannt, die zum Empfang von analogen und/oder digitalen Satelliten-Rundfunksignalen vorgesehen sind. Derartige Settop-Boxen werden üblicherweise in Form eines eigenständigen Gerätes realisiert und zwischen die Außeneinheit einer Satelliten-Empfangsanlage und einen herkömmlichen Fernsehempfänger geschaltet. In einer derartigen Settop-Box erfolgt eine Umsetzung der von der Außeneinheit der Satelliten-Empfangsanlage abgeleiteten Signale in Signale, die einem herkömmlichen Fernsehempfänger über dessen HF-Eingang oder über dessen Euro-AV-Buchse zugeführt werden.

Es ist weiterhin bereits bekannt, die Baugruppen einer Settop-Box in Form eines Moduls zu realisieren und dieses Modul in das Gehäuse eines Fernsehempfängers zu integrieren.

Über Rundfunksatelliten übertragene digitale Rundfunksignale können neben digitalen Audio- und Videodaten auch digitale Teletextdaten und andere digitale Daten enthalten, die mittels eines digitalen Empfangsgerätes empfangbar sind. Weiterhin ist es auch wünschenswert, mittels eines digitalen Empfangsgerätes Zugriff auf Internetdaten und/oder andere Datendienste zu haben. Will man mittels eines einzigen digitalen Empfangsgerätes eine Vielzahl von verschiedenartigen digitalen Daten empfangen und verarbeiten können, muß man in Kauf nehmen, dass die Herstellungs- und damit auch die Endverkaufspreise für digitale Empfangsgeräte hoch sind. Weiterhin sind derartige digitale Empfangsgeräte in ihrem Aufbau kompliziert, so dass an den Geräteentwickler hohe Anforderungen gestellt sind. Weiterhin wird in der Praxis von den meisten Käufern eines derartigen digitalen Empfangsgerätes eine Vielzahl der Funktionen des Gerätes niemals genutzt. Dennoch müssen auch diese Gerätekäufer die genannten hohen Preise für die digitalen Empfangsgeräte bezahlen.

Diese Nachteile werden bei einer Vorrichtung zum Empfang von digitalen Rundfunksignalen, wie sie in der
DE 10007710.2 beschrieben ist, vermieden. Diese bekannte Vorrichtung, die dem Oberbegriff des Anspruchs 1 entspricht, weist ein Zusatzmodul auf, welches mit einem digitalen Empfangsgerät über eine Geräteschnittstelle verbunden ist. Das Zusatzmodul ist mit einer Signalverarbeitungseinheit versehen, welcher eingangsseitig ein vom digitalen Empfangsgerät zur Verfügung gestellter, aus dem Empfangssignal abgeleiteter MPEG-Transportstrom zugeführt wird. Das Ausgangssignal der Signalverarbeitungseinheit des Zusatzmoduls gelangt über die Geräteschnittstelle zurück in das digitale Empfangsgerät und wird dort weiter verarbeitet. Zur Steuerung der bekannten Vorrichtung ist eine als Mikrocomputer realisierte zentrale Steuereinheit vorgesehen.

Der Erfindung liegt die Aufgabe zugrunde, einen Weg zur Verbesserung der vorstehend beschriebenen Vorrichtung aufzuzeigen.

Diese Aufgabe wird durch eine Vorrichtung mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass beim Einstecken eines Zusatzmoduls in das digitale Empfangsgerät und beim Abziehen des Zusatzmoduls vom digitalen Empfangsgerät während des Betriebes die Sicherheit für das Empfangsgerät und das Zusatzmodul gegen eine Zerstörung verbessert ist. Weiterhin wird durch den beanspruchten Schnittstellenprozessor die Verarbeitung der im MPEG-Transportstrom übertragenen Daten verbessert. Ferner wird durch eine Verlagerung aller Aufgaben, die im Zusammenhang mit der Schnittstelle und dem daran angeschlossenen Zusatzmodul anfallen, von der zentralen Steuereinheit des digitalen Rundfunkempfängers in den Schnittstellenprozessor die Performance der zentralen Steuereinheit verbessert. Diese kann schneller arbeiten und wird von zusätzliche Aufgaben entlastet.

Ein weiterer Vorteil der Erfindung besteht darin, dass aus ein und demselben Transportstrom abgeleitete Signale ohne Beteiligung der zentralen Steuereinheit an verschiedene, an den digitalen Rundfunkempfänger angeschlossene weitere Geräte, beispielsweise digitale Aufzeichnungsgeräte, weitergeleitet werden können. Die für diese Geräte ggf. zu erzeugende neuen Tabellen werden in vorteilhafter Weise im Schnittstellenprozessor generiert.

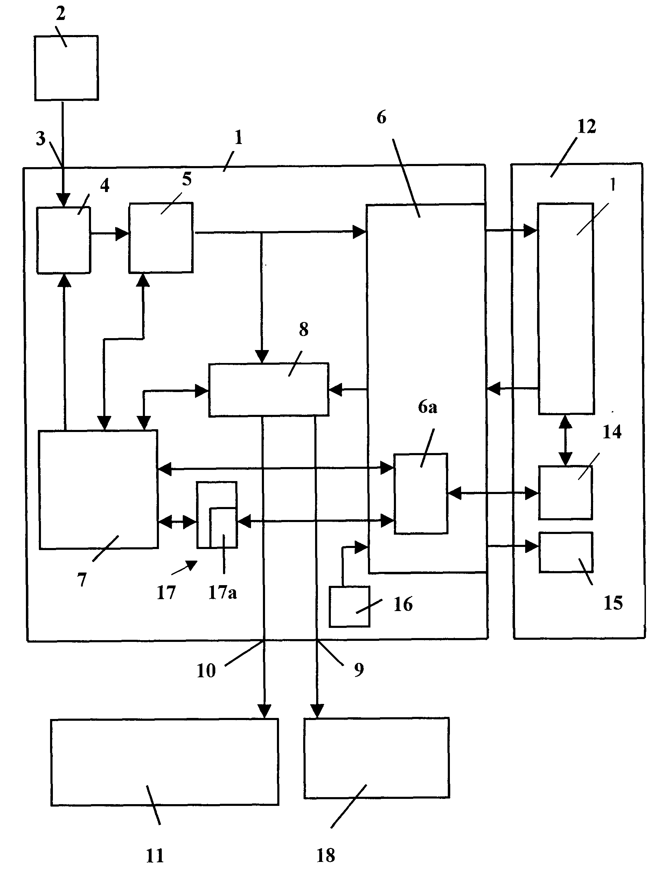

Weitere vorteilhafte Eigenschaften der Erfindung ergeben sich aus deren beispielhafter Erläuterung anhand der Figur, die ein Blockschaltbild einer Vorrichtung zum Empfang von digitalen Rundfunksignalen zeigt.

Die gezeigte Vorrichtung weist eine Satellitenempfangsantenne 2 auf, deren Ausgangssignale einem digitalen Empfangsgerät 1 über dessen Eingangsanschluß 3 zugeführt werden. Zur Wiedergabe von Signalen, die vom digitalen Empfangsgerät empfangen werden, ist ein an den Ausgang 10 des digitalen Empfangsgerätes angeschlossener Fernsehempfänger 11 vorgesehen. Weiterhin steht das digitale Empfangsgerät 1 über eine Geräteschnittstelle 6 mit einem Zusatzmodul 12 und über einen Ausgangsanschluss 9 mit einem digitalen Videorecorder 18 in Verbindung.

Die gezeigte Vorrichtung ist in verschiedenen Betriebsarten betreibbar.

In einer ersten Betriebsart werden von der Satellitenantenne 2 abgeleitete Signale dem digitalen Empfangsgerät 1, bei welchem es sich um eine Settop-Box handelt, über deren Eingangsanschluß 3 zugeleitet. Von dort aus werden sie über den Tuner 4 einem Demodulator 5 zugeführt. Dieser stellt an seinem Ausgang digitale Daten in Form eines MPEG-Transportstroms zur Verfügung. Dieser Transportstrom enthält einen Multiplex von mehreren Services. Ein Service kann ein oder mehrere Fernsehprogramme, ein oder mehrere Radioprogramme, Zusatzdaten zu den Radio- bzw. Fernsehprogrammen wie Teletextdaten, mehrsprachige Audiodaten, eine Programmzeitschrift und Untertiteldaten enthalten. Weiterhin kann ein Service auch Datendienste oder Programme im EDV-Sinne enthalten.

Dieser MPEG-Transportstrom wird einer Signalverarbeitungsschaltung 8 zugeführt, in welcher die Selektion eines gewünschten Services bzw. eines dem Service entsprechenden Unterdatenstromes erfolgt. Weiterhin erfolgt in der Signalverarbeitungsschaltung 8 eine Umwandlung des selektierten Datenstromes in Signale, die über den Ausgang 10 dem angeschlossenen Fernsehempfänger 11 zugeführt werden, wo sie auf dem Bildschirm dargestellt werden.

Die Steuerung des Tuners 4, des Demodulators 5 und der Signalverarbeitungsschaltung 8 erfolgt durch Steuersignale, die im Mikrocomputer 7 der Settop-Box generiert werden. Der Mikrocomputer 7 erzeugt die genannten Steuersignale in Abhängigkeit von Bedienbefehlen, die mittels einer nicht gezeichneten Bedieneinheit der Settop-Box eingegeben werden.

In einer weiteren Betriebsart der gezeigten Vorrichtung werden von der Satellitenantenne 2 abgeleitete Signale dem digitalen Empfangsgerät 1, bei welchem es sich um eine Settop-Box handelt, über deren Eingangsanschluß 3 zugeführt. Von dort aus werden sie über den Tuner 4 dem Demodulator 5 zugeführt. Dieser stellt an seinem Ausgang digitale Daten in Form eines MPEG-Transportstroms zur Verfügung, der - wie bereits oben ausgeführt wurde - einen Multiplex von mehreren Services aufweist. Einer dieser Services enthält einem Fernsehprogramm entsprechende digitale verschlüsselte Rundfunksignale.

Die Settop-Box 1 ist selbst nicht dazu in der Lage, derartige verschlüsselte Bildsignale zu entschlüsseln. Folglich wird in diesem Fall der MPEG-Transportstrom über die Geräteschnittstelle 6 dem Zusatzmodul 12 zugeführt. Dieses weist eine Signalverarbeitungseinheit 13 auf, in welcher ein Bildsignal-Entschlüssler vorgesehen ist.

Zur Separation des den verschlüsselten Bildsignalen entsprechenden Unterdatenstromes müssen dem Zusatzmodul 12 die zugehörigen Kennungen des Unterdatenstromes mitgeteilt werden, so dass das Zusatzmodul diesen Unterdatenstrom selbsttätig extrahieren und entschlüsseln kann. Die Kennungen können dabei direkt oder indirekt über Befehle der Bedieneinheit der Settop-Box vorgegeben werden und über den Mikrocomputer 7 und die Schnittstelle 6 dem Mikrocomputer 14 des Zusatzmoduls zugeführt werden. Dieser generiert ein Steuersignal für die Signalverarbeitungseinheit 13, welches den zu entschlüsselnden Unterdatenstrom spezifiziert.

Die mittels der Signalverarbeitungseinheit 13 entschlüsselten Signale werden über die Geräteschnittstelle 6 an die Signalverarbeitungseinheit 8 der Settop-Box 1 zurückgeführt und von dort aus über den Ausgang 10 an das Fernsehgerät 11 oder ggf. über den Ausgang 9 an den digitalen Videorecorder 18 weitergeleitet.

Die in der Figur dargestellte Vorrichtung weist weiterhin einen im Bereich der Schnittstelle 6 angeordneten Schnittstellenprozessor 6a auf. Dieser dient zur Erledigung einer Vielzahl von Aufgaben, die größtenteils die Arbeitsweise der Schnittstelle 6 betreffen.

Zu diesen Aufgaben gehört ein Erkennen des Einsteckens des als diskettenähnliche Steckkarte realisierten Zusatzmoduls 12 in einen Schlitz, der im Gehäuse des digitalen Rundfunkempfängers 1 vorgesehen ist. Dieses Einstecken als solches kann unter Verwendung von Sensoren detektiert werden, deren Ausgänge mit dem Schnittstellenprozessor (6a) verbunden sind.

Ist ein Einstecken des Zusatzmoduls 12 in den digitalen Rundfunkempfänger 1 erkannt, dann ist es notwendig, den Typ und die elektrischen Eigenschaften des eingesetzten Zusatzmoduls 12 zu identifizieren. Hierfür gibt es verschiedene Möglichkeiten. Eine dieser Möglichkeiten besteht darin, die Steckkontakte bzw. Anschlussstifte des Zusatzmoduls 12 in charakteristischer Weise zu codieren und diese Codierung unter Verwendung von mit dem Schnittstellenprozessor 6a verbundene Sensoren zu detektieren. Alternativ oder zusätzlich dazu können dem Typ und den elektrischen Eigenschaften des Zusatzmoduls 12 entsprechende Daten auch in einem Speicher des Zusatzmoduls 12 abgespeichert sein. Der Inhalt dieses Speichers wird nach dem Einstecken des Zusatzmoduls automatisch oder auf Abruf durch den Schnittstellenprozessor 6a in den Schnittstellenprozessor übertragen und in einem dem Schnittstellenprozessor zugeordneten Speicher abgespeichert.

Zu den genannten elektrischen Eigenschaften des Zusatzmoduls 12 gehört auch die Betriebsspannung des Zusatzmoduls. Hat der Schnittstellenprozessor die Information über die vom Zusatzmodul benötigte Betriebsspannung erhalten, dann leitet er die Energieversorgung des Zusatzmoduls dadurch in die Wege, dass er die von einer Spannungsquelle 16 des digitalen Empfangsgerätes 1 generierte Betriebsspannung über die Schnittstelle 6 einer Energieversorgungseinheit 15 des Zusatzmoduls 12 zuführt.

Zu den Aufgaben des Schnittstellenprozessors 6a gehört auch ein Erkennen eines Herausziehens des Zusatzmoduls 12 aus dem digitalen Empfangsgerät 1. Auch zu diesem Erkennen des Herausziehens können die Sensoren verwendet werden, mittels derer auch das Einstecken des Zusatzmoduls 12 in das digitale Empfangsgerät 1 detektiert wurde.

Hat der Schnittstellenprozessor 6a erkannt, dass das Zusatzmodul 12 aus dem digitalen Empfangsgerät 1 gezogen wurde, dann sorgt er für ein schnelles Entfernen der Versorgungsspannung von der Schnittstelle. Dadurch wird die Wahrscheinlichkeit einer Beschädigung von Empfangseinheit 1 und Zusatzmodul 12 stark verringert. Hat sich beispielsweise das Zusatzmodul 12 lediglich aufgrund von Erschütterungen oder aufgrund von abgenutzten oder beschädigten Anschlussstiften versehentlich gelockert, so dass eine Art Wackelkontakt vorliegt, dann könnte dies bei nicht abgeschalteter Versorgungsspannung zu einer Beschädigung insbesondere des Zusatzmoduls kommen.

Ist - wie oben ausgeführt wurde - ein Einstecken des Zusatzmoduls 12 detektiert und auch der Typ und die Eigenschaften des Zusatzmoduls 12 identifiziert, dann ist es notwendig, Datenpfade im digitalen Empfangsgerät 1 zu öffnen und zu schließen. Auch diese Aufgabe wird vom Schnittstellenprozessor 6a wahrgenommen. Beispielsweise muss nach dem Einstecken des Zusatzmoduls sichergestellt werden, dass der am Ausgang des Demodulators 5 vorliegende MPEG-Transportstrom auch über die Schnittstelle 6 in das Zusatzmodul 12 gelangen kann, wenn dort im Entschlüssler 13 eine Entschlüsselung von Signalen vorgenommen werden muss. Das Öffnen dieses Datenpfades wird vom Schnittstellenprozessor 6a durchgeführt.

Weiterhin muss nach einem Entfernen des Zusatzmoduls 12 aus dem digitalen Empfangsgerät 1 der vorstehend genannte Datenpfad wieder geschlossen werden, d. h. unterbrochen. Auch diese Aufgabe wird vom Schnittstellenprozessor 6a durchgeführt.

Zu den weiteren Aufgaben des Schnittstellenprozessors 6a gehört es, im Normalbetrieb der Vorrichtung in zyklischen Abständen Abfragesignale an das Zusatzmodul 12 auszusenden, um Auskunft darüber zu erhalten, ob das Zusatzmodul 12 momentan Daten an das digitale Empfangsgerät 1 senden möchte oder von dort benötigt. Ist das der Fall, dann sendet der Schnittstellenprozessor 6a ein Datenanforderungssignal an den Mikrocomputer 14 des Zusatzmoduls aus, aufgrund dessen die Datenübertragung vom Zusatzmodul in das digitale Empfangsgerät über die Schnittstelle 6 in die Wege geleitet wird.

Benötigt der Mikrocomputer 14 des Zusatzmoduls hingegen Daten aus dem digitalen Empfangsgerät 1, dann teilt der Schnittstellenprozessor 6a dies der zentralen Steuereinheit 7 mit. Diese übermittelt dann die geforderten Daten an den Schnittstellenprozessor 6a, der sie an den Mikrocomputer 14 des Zusatzmoduls weiterleitet.

Der Steuereinheit 7 des digitalen Empfangsgerätes 1 ist ein Speicher 17 zugeordnet, der während des Betriebes der Vorrichtung von der Steuereinheit 7 adressiert wird, um Daten einzuschreiben oder auszulesen. Dieser Speicher 17 ist mit einem Speicherbereich 17a versehen, welcher für den Schnittstellenprozessor 6a reserviert ist. Dies bedeutet, dass der Schnittstellenprozessor 6a Daten, die für die Steuereinheit 7 bestimmt sind, in diesen Speicherbereich 17a einschreiben kann, ohne dass die Steuereinheit 7 andere Aufgaben unterbrechen muss.

Weiterhin ist es im Betrieb der Vorrichtung ggf. notwendig, Teile des MPEG-Transportstromes, der Audio-, Video- und sonstige Daten als Teilströme enthält, an andere geräteinterne oder -externe Schnittstellen weiterzureichen. In diesem Zusammenhang ist eine Signalfilterung notwendig und in vielen Fällen auch eine Kompensation von Laufzeitdifferenzen. Auch diese Funktionalitäten werden in vorteilhafter Weise vom Schnittstellenprozessor 6a übernommen.

Werden aus dem am Ausgang des Demodulators 5 vorliegenden MPEG-Transportstrom unter Verwendung des Zusatzmoduls 12 Unterdatenströme separiert, geeignet verarbeitet und nach ihrer Verarbeitung über die Schnittstelle 6 an die Signalverarbeitungseinheit 8 des digitalen Empfangsgerätes zurückübertragen, um von dort aus zusammen mit anderen aus dem MPEG-Transportstrom abgeleiteten Daten dem digitalen Videorecorder 18 zugeführt zu werden, dann müssen neben der genannten Filterung und der genannten Kompensation von Laufzeitdifferenzen auch neue Tabellen erstellt werden, die die aufzuzeichnenden Daten beschreiben. Beispielsweise enthalten diese Tabellen Informationen über den Service, insbesondere den Service der Sender, den Event, insbesondere die Sendung, die Audiosprache, insbesondere die Landessprache, Titel bzw. Bezeichnungen und Beschreibungen von Anwendungsprogrammen, wie zum Beispiel einer elektronischen Programmzeitschrift - oder eines EPG (Electronic Program Guide).

Die vorstehend genannten Informationen als solche sind zwar bereits im MPEG-Transportstrom enthalten, der am Ausgang des Demodulators 5 vorliegt, müssen jedoch aus diesem separiert und zu einer neuen Tabelle zusammengefasst werden. Dies erfolgt in vorteilhafter Weise durch den Schnittstellenprozessor 6a, so dass die Steuereinheit 7 von dieser Aufgabe entlastet ist.

Gemäß einer weiteren Ausführungsform der Erfindung weist ein in das digitale Empfangsgerät 1 eingestecktes Zusatzmodul 12 einen Speicher auf, in welchem Software-Programme für die Steuereinheit 7 abgespeichert sind. Der Schnittstellenprozessor 6a sorgt in diesem Fall nach Erkennung eines derartigen Zusatzmoduls für die Übertragung dieser Software-Programme vom Zusatzmodul 12 über die Schnittstelle 6 in einen der Steuereinheit 7 zugeordneten Speicher des digitalen Empfangsgerätes 1.

Eine weitere Ausführungsform der Erfindung besteht darin, im Speicher des Zusatzmoduls 12 Software-Programme abzuspeichern, die den Schnittstellenprozessor 6a selbst betreffen. Hat der Schnittstellenprozessor 6a das Einstecken eines derartigen Zusatzmoduls in das digitale Empfangsgerät erkannt, dann sorgt er für die Übertragung dieser Software-Programme über die Schnittstelle 6 in einen dem Schnittstellenprozessor 6a selbst zugeordneten Speicher des digitalen Empfangsgerätes.

Vorzugsweise sind die vorstehend genannten Software-Programme jeweils mit einer Versionsnummer versehen. Auch diese Versionsnummer wird unter Steuerung durch den Schnittstellenprozessor in einem Speicher des digitalen Empfangsgerätes abgespeichert, so dass eine nicht notwendige spätere erneute Abspeicherung eines bereits abgespeicherten Software-Programmes unterbleibt.

Sind die genannten Software-Programme in verschlüsselter Form im Speicher des Zusatzmoduls 12 abgespeichert, dann kann die erforderliche Entschlüsselung der aus dem Speicher des Zusatzmoduls ausgelesenen Software-Progamme mittels des Schnittstellenprozessors 6a durchgeführt werden, der auch die nachfolgende Abspeicherung der entschlüsselten Software-Programme im Speicher des digitalen Empfangsgerätes 1 steuert.

Liegt gemäß einer weiteren Ausführungsform der Erfindung als Zusatzmodul 12 eine Standard-PCMCIA-Karte vor, dann wird der Schnittstellenprozessor 6a in vorteilhafter Weise zur Verarbeitung der Konfigurationsdaten genutzt. Bei einer entsprechenden Datenpfadumschaltung der unterschiedlichen Anschlussstifte kann ein digitales Empfangsgerät auch diesen Standard erfüllen. Gleiches gilt auch für weitere Modifikationen des PCMCIA-Standards.

Ein digitales Empfangsgerät gemäß der Erfindung muss keine Settop-Box sein. Es kann sich bei dem digitalen Empfangsgerät auch um einen digitalen Fernsehempfänger handeln, der die gezeigte Geräteschnittstelle 6 aufweist, über welche ein Zusatzmodul mit dem Empfänger verbindbar ist.

## Patentansprüche

1. Vorrichtung zum Empfangen von digitalen Rundfunksignalen, mit
- einem digitalen Empfangsgerät, welches eine einen Tuner und einen Demodulator aufweisende Empfangseinheit und
- eine Steuereinheit aufweist, wobei
- am Ausgang des Demodulators einem MPEG-Transportstrom entsprechende Daten vorliegen und wobei
- der Demodulator mit einer Signalverarbeitungseinheit und über eine Geräteschnittstelle des digitalen Empfangsgerätes mit einem Zusatzmodul verbunden ist und wobei
- das Zusatzmodul eine zweite Signalverarbeitungseinheit oder eine Speichereinheit aufweist, deren Ausgang über die Geräteschnittstelle mit der ersten Signalverarbeitungseinheit verbunden ist,
**dadurch gekennzeichnet, dass**
sie weiterhin einen Schnittstellenprozessor (6a) aufweist.

2. Vorrichtung nach Anspruch 1,
**dadurch gekennzeichnet, dass**
der Schnittstellenprozessor (6a) mit der Steuereinheit (7) verbunden ist und/oder der Schnittstellenprozessor (6a) mit einer Steuereinheit (14) des Zusatzmoduls (12) verbunden ist.

3. Vorrichtung nach Anspruch 1 oder 2,
**dadurch gekennzeichnet, dass**
der Schnittstellenprozessor (6a) zum Erkennen des Einsteckens und Herausziehens des Zusatzmoduls (12) dient und/oder der Schnittstellenprozessor (6a) zum Schließen und Öffnen von Datenpfaden dient und/oder der Schnittstellenprozessor (6a) zum Aktivieren der Spannungsversorgung des Zusatzmoduls (12) dient.

4. Vorrichtung nach einem der vorhergehenden Ansprüche,
**dadurch gekennzeichnet, dass**
der Schnittstellenprozessor (6a) zur Abfrage der Identität des Zusatzmoduls (12) dient.

5. Vorrichtung nach einem der vorhergehenden Ansprüche,
**dadurch gekennzeichnet, dass**
der Schnittstellenprozessor (6a) zur zyklischen Aussendung eines Datenabfragesignals an das Zusatzmodul (12) dient.

6. Vorrichtung nach einem der vorhergehenden Ansprüche,
**dadurch gekennzeichnet, dass**
der Schnittstellenprozessor (6a) zur Aussendung eines Datenanforderungssignals an das Zusatzmodul (12) dient.

7. Vorrichtung nach einem der vorhergehenden Ansprüche,
**dadurch gekennzeichnet, dass**
sie einen der Steuereinheit (7) zugeordneten Schreib-/Lesespeicher (17) aufweist, der Schreib-/Lesespeicher (17) für den Schnittstellenprozessor (6a) reservierte Speicherbereiche (17a) aufweist und der Schnittstellenprozessor (6a) zu einer Abspeicherung von Signalen in den reservierten Speicherbereichen (17a) dient.

8. Vorrichtung nach einem der vorhergehenden Ansprüche,
**dadurch gekennzeichnet, dass**
der Schnittstellenprozessor (6a) zur Signalfilterung dient und/oder der Schnittstellenprozessor (6a) zur Kompensation von Signallaufzeitdifferenzen beiträgt und/oder der Schnittstellenprozessor (6a) zur Generierung von Tabellen dient.

9. Vorrichtung nach einem der vorhergehenden Ansprüche,
**dadurch gekennzeichnet, dass**
das Zusatzmodul (12) einen Speicher aufweist, in welchem Software-Programme für die Steuereinheit (7) abgespeichert sind, und dass der Schnittstellenprozessor (6a) zur Übertragung dieser Software-Programme in einen der Steuereinheit (7) zugeordneten Speicher dient.

10. Vorrichtung nach einem der vorhergehenden Ansprüche,
**dadurch gekennzeichnet, dass**
das Zusatzmodul (12) einen Speicher aufweist, in welchem Software-Programme für den Schnittstellenprozessor (6a) abgespeichert sind, und dass die Vorrichtung einen dem Schnittstellenprozessor zugeordneten Speicher aufweist, der zur Abspeicherung dieser aus dem Speicher des Zusatzmoduls ausgelesenen Software-Programme für den Schnittstellenprozessor (6a) dient.

11. Vorrichtung nach Anspruch 9 oder 10,
**dadurch gekennzeichnet, dass**
die Vorrichtung einen Speicher aufweist, der zur Abspeicherung einer Software-Versionsnummer dient.

12. Vorrichtung nach einem der Ansprüche 9 - 11,
**dadurch gekennzeichnet, dass**
die Software-Programme in verschlüsselter Form im Speicher des Zusatzmoduls (12) abgespeichert sind und der Schnittstellenprozessor (6a) zur Entschlüsselung der aus dem Speicher des Zusatzmoduls ausgelesenen Software-Programme dient.

13. Vorrichtung nach einem der vorhergehenden Ansprüche,
**dadurch gekennzeichnet, dass**
der Schnittstellenprozessor (6a) zur Verarbeitung von Konfigurationsdaten für Standard-PCMCIA-Karten dient.
